# FASCICULE DE BREVET EUROPEEN

(11) **EP 2 044 786 B1**
(45) Date de publication et mention de la délivrance du brevet: **12.06.2013**
(21) Numéro de dépôt: 07823611.4
(22) Date de dépôt: 19.07.2007
(51) Int. Cl.: H04W 24/00

(54) **PROCEDE ET DISPOSITIF DE TEST DE RESISTANCE D'UN RESEAU RADIO AUX PERTURBATIONS EXTERNES**
VERFAHREN UND VORRICHTUNG ZUR PRÜFUNG DER AUSSERESTÖRUNGSFESTIGKEIT EINES FUNKNETZWERKS
METHOD AND DEVICE FOR TESTING THE RESISTANCE OF A RADIO NETWORK TO EXTERNAL DISTURBANCES

(30) Priorité: 20.07.2006 FR 0653054
(43) Date de publication de la demande: 08.04.2009
(73) Titulaire: Ercom Engineering Réseaux Communications, 78140 Vélizy-Villacoublay (FR)
(72) Inventeur: RIBLE, Frédéric, 91620 Nozay (FR); BRAUN, Daniel, 31300 Toulouse (FR)
(74) Mandataire: Beauvais, Emmanuelle
(86) Numéro de dépôt international: PCT/FR2007/051693
(87) Numéro de publication internationale: WO 2008/009864

(56) Documents cités:
- WO-A-00/59250
- WO-A-99/33297
- FR-A1- 2 865 874
- US-A1- 2004 127 257

## Description

La présente invention concerne un procédé et un dispositif de test de résistance aux perturbations externes d'un réseau de communications radios.

On connaît des moyens permettant de simuler des réseaux radio, par exemple les simulateurs de type MOBIPASS-SIM qui émulent le réseau radio GSM, GPRS ou UMTS, et qui sont capables d'effectuer par ce biais des tests de résistance à la charge ou de modification des paramètres dans les transmissions. Ces tests permettent de s'assurer du bon fonctionnement du réseau dans des conditions nominales ou autour de celles-ci. Par contre, on a constaté que ces simulateurs ne permettent pas de valider le bon fonctionnement d'un couple terminal réel/ réseau réel. Les terminaux ou réseaux réels sont susceptibles de présenter des dysfonctionnements qui ne sont pas visibles en environnement simulé.

La présente invention a pour but de remédier à cet inconvénient en fournissant un procédé et un dispositif de test de résistance de réseaux radio assurant la neutralisation et/ou la modification sélective et organisée de paquets de données échangés sur le lien radio entre un terminal de téléphonie mobile et une station de base du réseau. La neutralisation et la modification sélective et organisée sont effectuées, par exemple, après capture et analyse de premières données transmises par le terminal en direction de la station de base.

Le document FR 2 865 874 permet de réaliser une évaluation de la qualité de la transmission sur une liaison pour un premier mode de transmission (dit mode de transmission de référence), à partir de blocs transmis depuis une extrémité de la liaison selon ce premier mode et effectivement reçus à une autre extrémité de la liaison (page 16 lignes 18-20). En outre, cette solution permet, à l'aide d'une méthode dite des blocs perturbés, de prévoir une évaluation de la qualité de la transmission sur la liaison pour un autre mode de transmission (dit mode de transmission testé), à partir de ces mêmes blocs transmis sur la liaison selon le premier mode, sous réserve que le premier mode et cet autre mode testé soient « compatibles. Ces évaluations permettent ainsi de faire varier le débit en fonction d'une qualité souhaitée.

Le document WO 00/59250 décrit un procédé de test de fonctionnement de la communication descendante et d'un mobile dans un système de radiocommunications. Un tel procédé peut notamment convenir à un système de radiocommunications unidirectionnelles, ou dans lequel les liaisons montante et descendante sont de capacités asymétriques.

Ainsi, l'invention concerne un procédé de test d'un réseau de communications radios dans lequel on simule des perturbations externes dans le réseau, les perturbations étant introduites dans un échange de données entre un terminal de téléphonie mobile et une station de base du réseau, de manière à tester la résistance du réseau.

L'objectif d'un tel procédé est de déclencher des réactions des éléments du réseau, notamment le terminal et/ou la station de base, en réponse à ces perturbations, de manière à pouvoir enregistrer les réactions du réseau, les analyser et en déduire les défauts, dysfonctionnements ou failles pouvant résulter.

De manière plus précise, l'invention concerne un procédé de test d'un réseau de communications radios dans lequel on simule des perturbations externes de manière à tester la résistance interne du réseau, les perturbations étant introduites dans un échange de données entre un terminal de téléphonie mobile et une station de base du réseau au cours d'une des étapes ci-dessous , le terminal transmettant un message initial de données vers la station de base et un message de données de la station de base devant être envoyé vers le terminal en réponse au message initial :
- l'étape d'envoyer de données de brouillage sur le canal descendant de la station de base vers le téléphone mobile, et/ou
- l'étape d'envoyer des données de brouillage sur le canal montant du téléphone mobile vers la station de base, et/ou
- l'étape d'émettre des données de remplacement de message sur le canal montant du téléphone mobile vers la station de base,
et selon lequel, le déclenchement de protocoles de correction comprend en outre l'étape suivante:
- le terminal, détectant l'absence de réception du message de données de réponse attendu de la station de base en réponse au message initial, envoie à nouveau le message de données initial à destination de la station de base.

Dans une réalisation, le procédé comprend les étapes suivantes, lors de l'envoi d'un paquet de données du terminal vers la station de base :
- l'étape de démoduler, en temps réel, le paquet émis par le terminal,
- l'étape d'analyser au moins une partie des données du paquet démodulé afin de reconnaître le type de paquet, et
- l'étape d'émettre, en fonction du type de paquet, des données de perturbation sur une fréquence utilisée pour l'échange de données, de façon à perturber le fonctionnement normal de l'échange.

La reconnaissance du type de paquet correspond, par exemple, à la vérification qu'une condition de filtrage est remplie, par le biais de la reconnaissance de motifs de bits dans les données constituant le paquet de données.

Le procédé se décline selon trois modes dont les caractéristiques évoluent et se sophistiquent du mode 1 vers le mode 3.

Le mode 1 correspond à un procédé de neutralisation sélective de paquets échangés sur un lien radio.

Le but de ce premier mode de test est de brouiller la réponse de la station de base à un message envoyé par le terminal. Dans ce cas, le terminal ne reçoit pas de message de la station de base en réponse à son message initial, et enchaîne les branches de protocole destinées à corriger cette erreur. Notamment, il envoie de nouveau le même message. De son côté, la station de base reçoit successivement le même message, pour lequel elle a déjà envoyé une réponse, ce qui, dans certains cas, a pour conséquence de déclencher un protocole de correction au niveau de la station de base.

Le système de test démodule et décode en temps réel les paquets de données ou flux allant du terminal mobile vers la station de base. Les nouveaux échanges permettent donc de voir si le réseau retrouve un fonctionnement normal ou si le ou les équipements sont amenés à réaliser des émissions particulières qui peuvent être génératrices de dysfonctionnements ou de failles. Les émissions particulières peuvent, par exemple, correspondre à des émissions de données normalement cachées sur les caractéristiques du réseau ou de ses organes.

La mise en oeuvre de ce premier mode de test dans le procédé de test se fait de la façon décrite ci-après :
Dans une réalisation,le procédé de test est tel que les données de perturbation comprennent des données de brouillage, et sont émises sur une fréquence correspondant à la fréquence utilisée pour les échanges de données de la station de base vers le terminal.

Les données de brouillage correspondent à un flux de brouillage de durée et de format programmables.

Par ailleurs, dans une réalisation, le procédé est tel que l'émission des données de brouillage est effectuée après un retard déterminé, de préférence programmable.

Les données de brouillage sont destinées à corrompre la réponse émise par la station de base. En effet, l'analyse des données émises par le terminal étant effectuée au moment de l'envoi de ces données, il est utile, pour brouiller la réponse, de tenir compte du temps de réponse de la station de base à une sollicitation du terminal.

Un second mode de test consiste à brouiller directement le message, ou sollicitation, envoyé par le terminal.

Le système de test reconnaît le paquet à neutraliser en analysant seulement les premiers bits. Dès reconnaissance, il émet un flux radio de brouillage pour corrompre la fin de ce paquet.

Ainsi, dans une réalisation, les données de perturbation comprennent des données de brouillage, et sont émises sur une fréquence correspondant à la fréquence utilisée pour les échanges de données, du terminal vers la station de base.

Dans cette réalisation, l'émission des données de brouillage est, par exemple, effectuée dès la reconnaissance de premières données du paquet de données.

Dans ce mode de test, le terminal envoie un message qui n'atteint jamais la station de base. Il ne reçoit donc pas de réponse, ce qui a pour effet de déclencher des protocoles de correction similaires à ceux du premier mode.

Ce mode de test permet de tester uniquement le terminal, puisque la station de base ne reçoit aucun message, et n'en déduit donc pas d'erreur.

Un troisième mode de test correspond à une version plus évoluée du deuxième mode. L'objectif de ce troisième mode de test est de simuler l'envoi de messages erronés d'un terminal à une station de base.

Pour cela, on remplace des données émises par le terminal par des nouvelles données.

A cet effet, dans une réalisation, le procédé est tel que les données de perturbation comprennent des données de remplacement formant un message initial à destination de la station de base, ces données étant telles que les données émises par la station de base en réponse au message de remplacement sont différentes des données qui seraient émises en réponse au message initial du terminal.

Dans cette réalisation, l'émission des données de remplacement est, par exemple, effectuée après un retard déterminé, de préférence programmable.

Dans ce mode de test, le message émis par le terminal est brouillé et remplacé par un autre message. La station de base reçoit donc un message, qu'elle comprend, et auquel elle répond. Cette réponse est transmise au terminal, qui détecte une erreur, puisque la réponse reçue ne correspond pas au message envoyé initialement.

Ce mode de test permet donc de tester les protocoles de correction au niveau du terminal, mais également au niveau de la station de base dans le cas où le terminal envoie de nouveaux messages afin de corriger l'erreur.

La présente invention concerne également un dispositif de test destiné à mettre en oeuvre un procédé tel que celui décrit précédemment.

Ainsi, l'invention concerne un dispositif comprenant un testeur simulateur de réseau interconnecté au réseau de communications par le biais d'une antenne radio réceptrice et émettrice. Le simulateur est destiné à recevoir et/ou stocker et/ou traiter et/ou émettre des données comprises dans le groupe comprenant : des données émises par le terminal de téléphonie mobile, des données de perturbation, des données de remplacement et des données émises par la station de base.

Dans une réalisation, le dispositif est utilisé pour le test d'un réseau de communications de type GSM, et il est tel que le simulateur permet de recueillir des données concernant le terminal, telles que des données d'identité.

D'autres caractéristiques et avantages de l'invention apparaîtront au vu des figures sur lesquelles :
- la figure 1 décrit un réseau de communication destiné à être testé en utilisant un dispositif conforme à l'invention, et
- la figure 2 décrit un paquet de données transmis à une station de base dans le cadre d'un test de réseau.

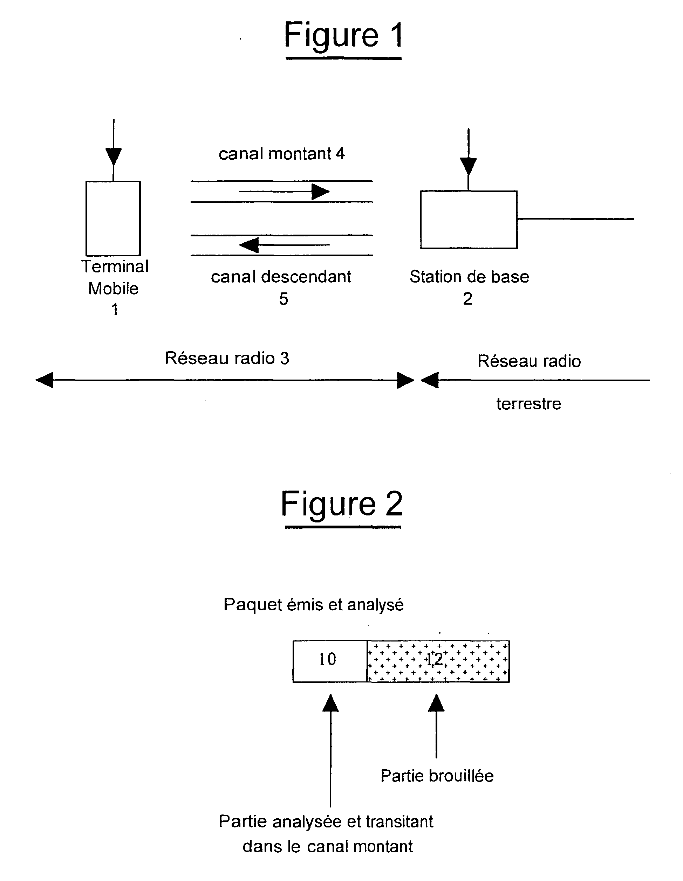

La figure 1 montre un échange entre un terminal 1 et une station de base 2. Le lien radio se compose de deux canaux de transmission : un canal montant 4 du terminal vers la station de base, et un canal descendant 5 de la station de base vers le terminal.

Cet échange est établi dans le cadre d'un réseau de communications radios 3 auquel appartiennent le terminal et la station de base.

Le dispositif de test de résistance s'installe entre le terminal 1 et la station de base 2 et permet :
- Soit de perturber les paquets de données par l'envoi de données de brouillage sur la fréquence utilisée sur le canal descendant pour que le terminal ne reçoive pas de réponse de la station de base. Cette perturbation correspond au premier mode de test décrit précédemment.
- Soit de neutraliser les données émises par le terminal, de façon que la station de base ne les reçoive pas.
Cette neutralisation, correspondant au second mode de test, est effectuée en envoyant des données de brouillage sur la fréquence utilisée sur le canal montant.
- Soit de remplacer une partie du paquet émis par le terminal par un paquet spécifique généré par le dispositif de test, en émettant des données de remplacement sur la fréquence utilisée par le canal montant.

Ainsi que décrit précédemment, les avantages d'un tel procédé et du dispositif le mettant en oeuvre sont les suivants :
- Possibilité de mesurer la résistance en fonction de la nature et de l'importance des brouillages que l'on émet ou des paquets perturbateurs en remplacement des paquets émis par le terminal ou la station de base.
- Possibilité de connaître et de repérer un terminal radio à l'origine de perturbations à l'intérieur d'un réseau de façon à le neutraliser, si par exemple, ce qui est généralement le cas, le terminal se ré-identifie sur le réseau s'il rencontre plusieurs échecs dans ses transmissions vers la base.
- Possibilité de neutraliser l'émission d'un ensemble de terminaux radio qui perturbent un réseau ou dont on veut stopper les émissions.

La figure 2 représente un paquet de données analysé dans le cadre d'un mode de test conforme au deuxième mode de test décrit précédemment.

Ce paquet de données comporte des premières données 10, transitant d'un terminal vers une station de base via un canal montant. Ces données sont démodulées en temps réel et analysées par un dispositif de test conforme à l'invention.

Après analyse des premières données, le dispositif détecte que c'est un paquet qu'il doit neutraliser. Pour cela, il envoie aussitôt, sur la fréquence utilisée sur le canal montant, des données de brouillage.

Les données de brouillage permettent donc de brouiller en temps réel le paquet de données, et les dernières données de ce paquet deviennent donc des données brouillées 12.

## Revendications

1. Procédé de test d'un réseau de communications radios (3) pour tester la résistance interne du réseau suite au déclenchement de protocoles de correction dans le réseau, dans lequel on simule des perturbations externes, les perturbations étant introduites dans un échange de données entre un terminal de téléphonie mobile (1) et une station de base (2) du réseau au cours d'une des étapes ci-dessous , le terminal transmettant un message initial de données vers la station de base et un message de données de la station de base devant être envoyé vers le terminal en réponse au message initial :
- l'étape d'envoyer de données de brouillage sur le canal descendant (5) de la station de base vers le téléphone mobile, et/ou
- l'étape d'envoyer des données de brouillage sur le canal montant (4) du téléphone mobile vers la station de base, et/ou
- l'étape d'émettre des données de remplacement de message sur le canal montant (4) du téléphone mobile vers la station de base,
et selon lequel, le déclenchement de protocoles de correction comprend en outre l'étape suivante:
- le terminal, détectant l'absence de réception du message de données de réponse attendu de la station de base en réponse au message initial, envoie à nouveau le message de données initial à destination de la station de base.

2. Procédé selon la revendication 1 comprenant les étapes suivantes, lors de l'envoi d'un paquet de données du terminal vers la station de base :
- l'étape de démoduler, en temps réel, le paquet émis par le terminal (1),
- l'étape d'analyser au moins une partie des données du paquet démodulé afin de reconnaître le type de paquet, et
- l'étape d'émettre, en fonction du type de paquet, des données de perturbation sur une fréquence utilisée pour l'échange de données, de façon à perturber le fonctionnement normal de l'échange.

3. Procédé selon la revendication 2 dans lequel les données de perturbation comprennent des données de brouillage, et sont émises sur une fréquence correspondant à la fréquence utilisée pour les échanges de données de la station de base (2) vers le terminal (1).

4. Procédé selon la revendication 3 dans lequel l'émission des données de brouillage est effectuée après un retard déterminé, de préférence programmable.

5. Procédé selon la revendication 2 dans lequel les données de perturbation comprennent des données de brouillage, et sont émises sur une fréquence correspondant à la fréquence utilisée pour les échanges de données du terminal (1) vers la station de base (2).

6. Procédé selon la revendication 5 dans lequel l'émission des données de brouillage est effectuée dès la reconnaissance de premières données (10) du paquet de données.

7. Procédé selon la revendication 5 ou 6 dans lequel les données de perturbation comprennent des données de remplacement formant un message initial à destination de la station de base (2), ces données étant telles que les données émises par la station de base (2) en réponse au message de remplacement sont différentes des données qui seraient émises en réponse au message initial du terminal (1).

8. Procédé selon la revendication 7 dans lequel l'émission des données de remplacement est effectuée après un retard déterminé, de préférence programmable.

9. Dispositif mettant en oeuvre un procédé conforme à l'une des revendications précédentes, comprenant un testeur simulateur de réseau interconnecté au réseau de communications (3) par le biais d'une antenne radio réceptrice et émettrice, le simulateur étant destinée à recevoir et/ou stocker et/ou traiter et/ou émettre des données comprises dans le groupe comprenant : des données émises par le terminal de téléphonie mobile (1), des données de perturbation, des données de remplacement et des données émises par la station de base (2).

10. Dispositif selon la revendication 9 utilisé pour le test d'un réseau de communications de type GSM, et tel que le simulateur permet de recueillir des données concernant le terminal, telles que des données d'identité.

## Patentansprüche

1. Verfahren zum Testen eines Funk-Kommunikationsnetzes (3) zum Testen des inneren Widerstandes des Netzes nach dem Auslösen von Korrekturprotokollen im Netz, bei dem man externe Störungen simuliert, wobei die Störungen in einen Datenaustausch zwischen einem Mobiltelefonterminal (1) und einer Basisstation (2) des Netzes im Laufe eines der folgenden Schritte eingeführt werden, der Terminal eine ursprüngliche Daten-Nachricht an die Basisstation überträgt, und eine Daten-Nachricht von der Basisstation als Antwort auf die ursprüngliche Nachricht zu übertragen ist:
- der Schritt zum Senden von Interferenzdaten auf dem absteigenden Kanal (5) von der Basisstation zum Mobiltelefon, und/ oder
- der Schritt zum Senden von Interferenzdaten auf dem ansteigenden Kanal (4) vom Mobiltelefon zur Basisstation, und/ oder
- der Schritt zum Senden von Nachrichtenersatzdaten auf dem ansteigenden Kanal (4) vom Mobiltelefon zur Basisstation,
und bei dem das Auslösen von Korrekturprotokollen darüber hinaus den folgenden Schritt umfasst:
- der Terminal, der den fehlenden Empfang der erwarteten Antwortdatennachricht aus der Basisstation als Antwort auf die ursprüngliche Nachricht erfasst, sendet die ursprüngliche Daten-Nachricht erneut an die Basisstation.

2. Verfahren nach Anspruch 1, umfassend die folgenden Schritte bei der Versendung eines Datenpakets vom Terminal an die Basisstation:
- den Schritt, das vom Terminal (1) ausgesandte Datenpaket in Echtzeit zu demodulieren,
- den Schritt, zumindest einen Teil der Daten des demodulierten Pakets zu analysieren, um den Pakettyp zu erkennen, und
- den Schritt, je nach Pakettyp, Störungsdaten auf einer für den Datenaustausch verwendeten Frequenz auszusenden, sodass der Normalbetrieb beim Austausch gestört wird.

3. Verfahren nach Anspruch 2, bei dem die Störungsdaten Interferenzdaten umfassen, und auf einer Frequenz ausgesendet werden, die der Frequenz entspricht, die für den Datenaustausch von der Basisstation (2) zum Terminal (1) verwendet wird.

4. Verfahren nach Anspruch 3, bei dem die Aussendung von Interferenzdaten nach einer bestimmten Verzögerung erfolgt, die vorzugsweise programmiert werden kann.

5. Verfahren nach Anspruch 2, bei dem die Störungsdaten Interferenzdaten umfassen, und auf einer Frequenz ausgesendet werden, die der Frequenz entspricht, die für den Datenaustausch vom Terminal (1) zur Basisstation (2) verwendet wird.

6. Verfahren nach Anspruch 5, bei dem die Aussendung von Interferenzdaten sofort nach Erkennung der ersten Daten (10) des Datenpakets erfolgt.

7. Verfahren nach Anspruch 5 oder 6, bei dem die Störungsdaten Ersatzdaten umfassen, die eine ursprüngliche Nachricht in Richtung der Basisstation (2) bilden, wobei diese Daten so sind, dass sich die von der Basisstation (2) als Antwort auf die Ersatznachricht ausgesandten Daten von jenen Daten unterscheiden, die als Antwort auf die ursprüngliche Nachricht des Terminals (1) gesendet worden wären.

8. Verfahren nach Anspruch 7, bei dem die Aussendung von Ersatzdaten nach einer bestimmten Verzögerung erfolgt, die vorzugsweise programmiert werden kann.

9. Vorrichtung, die ein Verfahren nach einem der vorherigen Ansprüche anwendet, umfassend einen Netzsimulator-Tester, der über eine Empfangs- und Sendefunkantenne mit dem Kommunikationsnetz (3) verbunden ist, und der Simulator dazu bestimmt ist, Daten zu empfangen und/ oder abzulegen und/ oder zu bearbeiten und/ oder auszusenden, die in einer Gruppe enthalten sind, die folgendes umfasst: Daten, die von einem Mobiltelefonterminal (1) gesendet werden, Störungsdaten, Ersatzdaten und Daten, die von der Basisstation gesendet werden.

10. Vorrichtung nach Anspruch 9, die zum Testen eines Kommunikationsnetzes des Typs GSM verwendet wird, und so gestaltet ist, dass durch den Simulator den Terminal betreffende Daten, wie Identitätsdaten, empfangen werden können.

## Claims

1. A radio communications network (3) test method to test the internal resistance of the network in reference to the triggering of correction protocols in the network, wherein external disturbance is simulated, the disturbances being introduced into a data exchange between a terminal of mobile telephony (1) and a base station (2) of the network, during one of the steps below, the terminal transmitting an initial data message to the base station, and a data message of the base station having to be sent to the terminal, in response to the initial message:
- the step of sending interference data on the downstream channel (5) from the base station to the mobile telephone, and/or
- the step of sending interference data on the upstream channel (4) from the mobile telephone to the base station, and/or
- the step of emitting message replacement data on the upstream channel (4) from the mobile telephone to the base station, and according to which, the triggering of correction protocols additionally comprises the following step:
- the terminal, detecting the absence of reception of the expected response data message from the base station, in response to the initial message, sends a new initial data message to the destination of the base station.

2. Method according to claim 1, comprising the following steps, at the time when a data packet from the terminal is sent to the base station:
- the step of demodulating, in real time, the packet emitted by the terminal (1),
- the step of analysing at least one part of the demodulated data packet, aiming to recognise the type of packet, and
- the step of emitting, in accordance with the type of packet, the disturbance data on a frequency used for the exchange of data, in a way that disturbs the normal functioning of the exchange.

3. Method according to claim 2 wherein the disturbance data comprises interference data, and is emitted on a frequency corresponding to the frequency used for the exchange of data from the base station (2) to the terminal (1).

4. Method according to claim 3 wherein the emission of interference data is performed after a determined delay, preferably programmable.

5. Method according to claim 2 wherein the disturbance data comprises interference data, and is emitted on a frequency corresponding to the frequency used for the exchange of data from the terminal (1) to the base station (2).

6. Method according to claim 5 wherein the emission of interference data is performed from the recognition of first data (10) of the data packet.

7. Method according to claim 5 or 6 wherein the disturbance data includes replacement data forming an initial message to the destination of the base station (2), this data being such as the data emitted by the base station (2) in response to the replacement message being different to the data which would be emitted in response to the initial message of the terminal (1).

8. Method according to claim 7 wherein the emission of replacement data is performed after a determined delay, preferably programmable.

9. Device implementing a method according to one of the previous claims, comprising a network simulator tester networked with the communications network (3) by means of a receiver-transmitter radio antenna, the simulator being intended to receive and/or store and/or process and/or emit data comprised in the group comprising: data emitted by the mobile telephony terminal (1), disturbance data, replacement data and data emitted by the base station (2).

10. Device according to claim 9 used for the testing of GSM-type communications network, and such as the simulator allows the collecting of data concerning the terminal, such as identity data.
